(19) Europäisches Patentamt
European Patent Office
Office européen des brevets

(11) Veröffentlichungsnummer: **0 261 409 B1**

(12) **EUROPÄISCHE PATENTSCHRIFT**

(45) Veröffentlichungstag der Patentschrift: **02.01.92**

(51) Int. Cl.5: **C08G 18/10**, C08G 18/38, C09K 3/10, C09J 175/04

(21) Anmeldenummer: **87112188.5**

(22) Anmeldetag: **21.08.87**

Die Akte enthält technische Angaben, die nach dem Eingang der Anmeldung eingereicht wurden und die nicht in dieser Patentschrift enthalten sind.

(54) **Verfarhen zur herstellung von Alkoxysilanterminierten, feuchtigkeitsärtenden Polyurethanen sowie ihre Verwendung für Klebe- und Dichtungsmassen.**

(30) Priorität: **28.08.86 DE 3629237**

(43) Veröffentlichungstag der Anmeldung: **30.03.88 Patentblatt 88/13**

(45) Bekanntmachung des Hinweises auf die Patenterteilung: **02.01.92 Patentblatt 92/01**

(84) Benannte Vertragsstaaten: **AT BE CH DE ES FR GB GR IT LI LU NL SE**

(56) Entgegenhaltungen:
**EP-A- 0 170 865**

**PATENT ABSTRACTS OF JAPAN, unexamined applications, Field C. Vol. 9, Nr. 175, 19. Juli 1985**

**THE PATENT OFFICE JAPANESE GOVERNMENT Seite 115 C 292**

(73) Patentinhaber: **Henkel Kommanditgesellschaft auf Aktien
Postfach 1100 Henkelstrasse 67
W-4000 Düsseldorf-Holthausen(DE)**

(72) Erfinder: **Emmerling, Winfried, Dr.
Lärchenweg 6
W-4006 Erkrath(DE)**
Erfinder: **Podola, Tore
Deusserstrasse 31
W-4019 Monheim(DE)**

EP 0 261 409 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft alkoxysilanterminierte, feuchtigkeitshärtende Polyurethane, Verfahren zu ihrer Herstellung und ihre Verwendung in Klebe- und Dichtungsmassen.

Feuchtigkeitshärtende Einkomponenten-Polyurethansysteme mit freien NCO-Gruppen sind als Basis für Anstrichstoffe, Klebstoffe und Dichtungsmassen bekannt. Es sind auch Systeme bekannt, bei denen ein Teil der NCO-Gruppen eines Polyurethan-Prepolymeren mit solchen Alkoxysilanen umgesetzt sind, bei denen eine Alkylgruppe an Silizium eine gegenüber Isocyanat reaktive Gruppe (z. B. Mercapto, Amin) trägt (vergl. US-PS 3 627 722). Durch diese Maßnahme soll die Haftung auf verschiedenen anorganischen Oberflächen verbessert werden.

Die Aushärtung (Vernetzung) erfolgt jedoch stets unter Beteiligung nicht umgesetzter, freier NCO-Gruppen.

Mit organofunktionellen Alkoxysilanen umgesetzte Polyurethane sind auch Bestandteil vieler Voranstriche (Primer) auf anorganischen Materialien. Auch hier bewirken die $Si(OR)_3$-Gruppen eine Haftungsverbesserung zwischen anorganischem Grundmaterial und eigentlichen Anstrich. Weiterhin ist in der DE-OS 25 51 275 eine Automobildichtungsmasse beschrieben, die ausschließlich über Alkoxysilan-Endgruppen aushärten. Dabei werden ausgesprochen harte Massen mit beispielsweise einer Shore A-Härte von 63 erhalten.

Einkomponenten-Polyurethansysteme, die im wesentlichen über Isocyanat-Endgruppen aushärten, entwickeln durch das während der Vernetzung teilweise freigesetzte Kohlendioxid gelegentlich kleine Blasen in der ausgehärteten Masse. Eine Aushärtung über $Si(OR)_3$-Gruppen ist dagegen prinzipiell blasenfrei.

Polyurethansysteme mit $Si(OR)_3$-Endgruppen bilden jedoch im ausgehärteten Zustand meist harte und spröde Massen geringer Elastizität. Daher sind sie in dieser Form als Basis von Dichtungsmassen nicht geeignet. Denn hier werden für viele Anwendungsbereiche weichelastische Massen mit gutem Rückstellvermögen gefordert. Derartige Systeme mit einem besseren Dehnvermögen als beispielsweise die in der erwähnten DE-OS 25 51 275 beschriebenen Polymersysteme wären daher erwünscht.

Aus der EP A 170 865 ist ein Verfahren zur Herstellung von unter Feuchtigkeitsausschluß lagerstabilen Beschichtungs-, Dichtungs- und Klebemassen bekannt, die gute mechanische Eigenschaften aufweisen. Nach diesem Verfahren werden NCO-terminierte Polyetherurethane mit Amino- oder Mercaptogruppen aufweisenden Alkoxysilanen mit mindestens 2 Ethersauerstoffatomen in mindestens einem Alkoxyrest zu prepolymeren Silanen umgesetzt. Falls geringere Vernetzungsgrade der Endprodukte gewünscht werden, können nach diesem Verfahren das NCO/Silan- Verhältnis so eingestellt werden, daß das prepolymere Silan noch über freie NCO-Gruppen verfügt, die anschließend mit Kettenabbrechern wie monofunktionellen Alkoholen abreagiert werden. Obgleich derartige Endprodukte gute mechanische Eigenschaften zeigen, sind sie jedoch insbesondere im Hinblick auf ihre Aushärtungsgeschwindigkeit zu verbessern.

Demgemäß ist die Erfindung auf alkoxysilan-terminierten Polyurethane gerichtet, die gegenüber dem aus dem Stand der Technik bekannten, blasenfrei aushärtenden Massen ein besseres Dehnvermögen und kürzere Aushärtungszeiten aufweisen.

Gegenstand der vorliegenden Erfindung ist demnach ein Verfahren zur Herstellung von alkoxysilanterminierten, feuchtigkeitshärtenden Polyurethanen, dadurch gekennzeichnet, daß man

a) OH-terminierte Triole und/oder lineare Diole mit Diisocyanaten zu NCO-terminierten Polyurethan-Prepolymeren mit einer mittleren NCO-Funktionalität von mindestens 2 umsetzt und einen Teil der NCO-Gruppen mit linearen oder verzweigten aliphatischen Alkoholen mit 1 bis 18 C-Atomen oder Monoalkylpolyetheralkoholen zu einem Polyurethan mit einer mittleren NCO-Funktionalität von mindestens 1 und weniger als 2 umsetzt, oder

a') die OH-terminierten Triole oder linearen Diole mit einem Gemisch von Mono- und Diisocyanaten zu NCO-terminierten Polyurethan-Prepolymeren mit einer mittleren NCO-Funktionalität von mindestens 1 und weniger als 2 umsetzt und

b) im wesentlichen sämtliche freien NCO-Gruppen der erhaltenen Polyurethane mit Alkoxysilanen der allgemeinen Formel

$$X - (CH_2)_{n'} - \overset{R}{\underset{(OR^4)_q}{Si}}(OR^1)_p \quad \text{in der}$$

$$X = -SH, -NHR^2, R^2CH-\underset{\diagdown O \diagup}{CH-CH}-CH_2-O-,$$

$$-(NH-CH_2-CH_2)_n-NHR^2 \quad \text{und}$$

n' = 1 oder 2 und
R = $-CH_3$, $-CH_2-CH_3$, $-OR^1$ und
$R^1$ = $-(CH_2-CH_2-O)_m-R^3$ und
$R^2$ = H oder ein gegebenenfalls substituierter aliphatischer und/oder cycloaliphatischer oder aromatischer Kohlenwasserstoffrest mit 1 - 10 C-Atomen
und
$R^3$ = ein gegebenenfalls substituierter Alkylrest mit 1 - 10 C-Atomen und
$R^4$ = ein Alkylrest mit 1 - 4 C-Atomen und
n = 1 - 8, m = 1-30, p = 1 sowie q + p = 2 bedeuten können, umsetzt.

Die erfindungsgemäß einzusetzenden Triole und/oder linearen Diole weisen Zahlenmittel der Molekulargewichte von vorzugsweise 300 bis 6500, insbesondere 500 bis 3000, auf. Bevorzugte Vertreter sind Alkoxylierungs-, insbesondere Ethoxylierungs- und/oder Propoxylierungsprodukte di- oder trifunktioneller Alkohole, ausgewählt aus der von Ethylenglykol, Diethylenglykol, Triethylenglykol, 1,2-Propandiol, Dipropylenglykol, den Butandiolen, Hexandiolen, Octandiolen, technische Gemische von Hydroxyfettalkoholen mit 14 bis 22 C-Atomen, insbesondere Hydroxystearylalkohol, Trimethylolpropan und Glycerin gebildeten Gruppe. Dabei kann man dem Grundmolekül einen mehr hydrophoben oder hydrophilen Charakter geben. Es ist möglich, durch überwiegende Addition von Propylenoxid an mehrfunktionelle Alkohole ein überwiegend hydrophobes Molekül zu erhalten, während man bei der Zudosierung bzw. ausschließlicher Oxalkylierung mit Ethylenoxid hydrophilere Moleküle erhält. Dies wirkt sich auch auf das nach der endgültigen Vernetzung gebildete Makromolekül aus.

Weiterhin können als Polyhydroxylverbindungen Polyester aus niedermolekularen Dicarbonsäuren wie Adipinsäure, Isophthalsäure, Terephthalsäure und Phthalsäure mit einem Überschuß der obengenannten Polyole eingesetzt werden.

Als typische Vertreter für die aromatischen Diisocyanate sind: 2,4- und 2,6-Toluoldiisocyanat, insbesondere als technisches Gemisch; p-Phenylendiisocyanat, 4,4'-Diphenyldiisocyanat, 1,5-Naphthalindiisocyanat, 4,4'-Diphenylmethandiisocyanat, 3,3'-Dimethoxy-4,4'-diphenyldiisocyanat, Xylylendiisocyanat.

Verteter aliphatischer Diisocyanate sind insbesondere 1,4-Tetramethylendiisocyanat,1,6-Hexamethylendiisocyanat, Decan-1,10-diisocyanat, 2,2,4-Trimethylhexamethylendiisocyanat, Dicyclohexylmethandiisocyanat und Isophorondiisocyanat, sowie schließlich die technischen Isocyanate, welche bei der Phosphogenierung aus den Aminen erhältlich sind, die durch Hydrieren von Dimerfettsäurenitrilen anfallen.

Als Vertreter der Monoisocyanate sind in erster Linie aromatische wie Phenylisocyanat, Tolylisoscyanat und Naphthylenisocyanat erwähnenswert.

Als erfindungsgemäß verwendbare lineare oder verzweigte aliphatische Alkohole sind insbesondere Methanol, Ethanol, die Isomeren des Propanols, Butanols und Hexanols sowie die durch Reduktion von Fettsäuren erhältlichen primären Alkohole mit 8 bis 18 C-Atomen wie Octanol, Decanol, Dodecanol, Tetradecanol, Hexadecanol und Octadecanol, insbesondere in Form technischer Gemische derselben, zu nennen. Monoalkohole mit 4 bis 18 C-Atomen sind bevorzugt, da sich die niedrigen Alkohole nur schwer wasserfrei herstellen lassen.

Weiterhin einsetzbar sind Monoalkylpolyetheralkohole unterschiedlichen Molekulargewichts, wobei ein Zahlenmittel des Molekulargewichts zwischen 1000 und 2000 bevorzugt ist. Ein bevorzugter Vertreter ist z. B. Monobutylpropylenglykol.

Je kleiner die NCO-Funktionalität der NCO-terminierten Polyurethane ist, desto weicher lassen sich die ausgehärteten silanisierten Endprodukte einstellen. Zweckmäßigerweise beträgt daher das Zahlenmittel der NCO-Funktionalität der NCO-terminierten Polyurethane zwischen 1,8 und 1,2.

Die Alkoxysilane der vorstehend wiedergegebenen allgemeinen Formel sind handelsübliche Verbindungen. Eine Darstellung dieser Verbindungen sowie ihre Wirkungsweise findet sich in der Monografie "Silane Coupling Agents" von Plueddemann, Plenum Press, New York (1982).

Vorzugsweise erfolgt die Umsetzung der freien NCO-Gruppen der Polyurethane mit den Alkoxysilanen nach der vorstehenden allgemeinen Formel in Gegenwart von Katalysatoren, wie sie z. B. aus der US-PS 3 627 722 bekannt sind. Die Verwendung von Dibutylzinndilaurat als Katalysator ist bevorzugt.

Die Erfindung betrifft weiterhin mercaptopropyltrimethoxysilanterminierte, feuchtigkeitshärtende Polyurethane, erhältlich durch

a) Umsetzung von OH-terminierten Triolen und/oder linearen Diolen mit Diisocyanaten zu NCO-terminierten Polyurethan-Prepolymeren mit einer mittleren NCO-Funktionalität von mindestens 2 und Umsetzung eines Teils der NCO-Gruppen mit linearen oder verzweigten aliphatischen Alkoholen mit 1 bis 18 C-Atomen oder Monoalkylpolyetheralkoholen zu einem Polyurethan mit einer mittleren NCO-Funktionalität von mindestens 1 und weniger als 2, oder

a') Umsetzung der OH-terminierten Triole oder linearen Diole mit einem Gemisch von Mono- und Diisocyanaten zu NCO-terminierten Polyurethan-Prepolymere mit einer mittleren NCO-Funktionalität von mindestens 1 und weniger als 2 und

b) Umsetzung im wesentlichen sämtlicher freien NCO-Gruppen der erhaltenen Polyurethan-Prepolymere mit Mercaptopropyltrimethoxysilan.

Bevorzugte Ausführungsformen ergeben sich aus der obigen Beschreibung.

Die Erfindung betrifft weiterhin feuchtigkeitshärtende Klebemassen und Dichtungsmassen, enthaltend die obengenannten alkoxysilanterminierten Polyurethane gemäß der vorangegangenen Beschreibung sowie gegebenenfalls übliche Zusatzstoffe wie Pigmente, Füllstoffe, Härtungskatalysatoren und UV-Stabilisatoren. Als Füllstoffe geeignet sind gegenüber Isocyanaten inerte anorganische Verbindungen, z. B. Kreide oder Kalkmehl, gefällte und/oder pyrogene Kieselsäure, Zeolithe, Bentonite, gemahlene Mineralstoffe sowie andere dem Fachmann geläufige anorganische Füllstoffe. Weiterhin können auch organische Füllstoffe eingesetzt werden, insbesondere Faserkurzschnitte und dergleichen. Für manche Anwendungen sind Füllstoffe bevorzugt, die den Zubereitungen Thixotropie verleihen, z. B. quellbare Kunststoffe wie PVC.

Ein typischer Härtungskatalysator ist das bereits erwähnte Dibutylzinndilaurat; vorzugsweise werden den Massen noch als Härtungsbeschleuniger wirkende Vernetzer wie Ethyltriacetoxysilan zugesetzt.

Die Erfindung wird im folgenden anhand von bevorzugten Ausführungsbeispielen und Vergleichsversuchen näher erläutert.

Beispiel 1

In einem beheizbaren Rührkessel werden unter $N_2$-Atmosphäre 800 Teile (= 0,8 Äquivalente) Polypropylenglykol des Molgewichts 2025 und 150 Teile (= 1,2 Äquivalente) 4,4'-Diphenylmethandiisocyanat (MDI) bei 80 °C unter Rühren umgesetzt. Nach ca. 5 Stunden ist der theoretische Wert von 1,77 % NCO-Gruppen erreicht. Danach werden 150 Teile (= 0,2 Äquivalente) Polypropylenglykolmonobutylether (MG 750) zugegeben und bis zum theoretischen NCO-Gehalt von 0,76 % weiterreagieren gelassen. Nach Erreichen dieses Wertes werden 39,2 Teile (= 0,2 Äquivalente) Mercaptopropyltrimethoxysilan und 0,23 Teile Dibutylzinndilaurat zugegeben und weitere 2 Stunden gerührt. Alle Umsetzungen wurden bei 80 °C vorgenommen. Der danach gemessene NCO-Gehalt ist kleiner als 0,03 %. Die Viskosität des Endproduktes betrug bei 25 °C 200 000 mPa.s nach Brookfield.

Vergleichsversuch A

Unter den Bedingungen aus Beispiel 1 wird aus 800 Teilen (= 0,8 Ãquivalente) Polypropylenglykol des Molgewichts 2025 und 150 Teilen (= 1,2 Äquivalente) MDI ein NCO-terminiertes Prepolymer hergestellt. Dieses wird in einer zweiten Reaktionsstufe mit 78,4 g (= 0,4 Äquivalente) Mercaptopropyltrimethoxysilan und 0,21 Teilen Dibutylzinndilaurat vollständig umgesetzt. Die Viskosität des Endproduktes betrug bei 25 °C 240 000 mPa.s nach Brookfield.

Beispiel 2

Unter den Bedingungen von Beispiel 1 werden 900 Teile (= 0,9 Äquivalente) Polypropylenglykol des Molgewichts 2025, 4,5 Teile (= 0,1 Äquivalente) Trimethylolpropan und 212,5 Teile (= 1,7 Äquivalente) MDI zu einem NCO-terminierten Prepolymeren umgesetzt (NCO = 2,6 %).
Dazu werden 25 g (0,35 Äquivalente) Butanol gegeben und nach Erreichen des theor. NCO-Gehaltes von 1,2 % nochmals 68,6 Teile (= 0,35 Äquivalente) Mercaptopropyltrimethoxysilan und 0,2 Teile Dibutylzinndilurat gegeben. Alle Reaktionen wurden unter trockenem Stickstoff bei 80 °C durchgeführt. Der danach gemessene NCO-Gehalt ist kleiner als 0,03 %. Die Viskosität des Produktes betrug bei 25 °C 430 000 mPa.s nach Brookfield.

Vergleichsversuch B

Das NCO-terminierte Zwischenprodukt aus Beispiel 2 wird mit 137,2 Teilen (= 0,7 Äquivalente) Mercaptopropyltrimethoxysilan und 0,2 Teilen Dibutylzinndilaurat umgesetzt. Der danach gemessene NCO-Gehalt ist kleiner als 0,03 %. Die Viskosität des Produktes betrug bei 25 °C 540 000 mPa.s nach Brookfield.

Beispiel 3

Die beschriebenen alkoxysilanterminierten Prepolymere aus Beispiel 1, 2 und 3 wurden mit jeweils 7,5 Gew.-% Ethyltriacetoxysilan und 1,5 Gew.-% Dibutylzinndilaurat gemischt und an der Luftfeuchtigkeit gehärtet. Die mechanischen Eigenschaften der ausgehärteten Produkte wurden nach DIN 53504 an ca. 2 mm dicken Folien geprüft.

Aus der Tabelle ergibt sich, daß die alkoxysilanterminierten Polyurethane der Erfindung nach dem Aushärten an der Luft eine erhebliche höhere Reißdehnung aufweisen.

Tabelle

| Prepolymeres aus | Reißfestigkeit $N/cm^2$ | Reißdehnung % |
|---|---|---|
| Beispiel 1 | 30 | 150 |
| Vergleichsversuch A | 50 | 50 |
| Beispiel 2 | 10 | 150 |
| Vergleichsversuch B | 10 | 25 |

**Patentansprüche**

**1.** Verfahren zur Herstellung von alkoxysilanterminierten, feuchtigkeitshärtenden Polyurethanen, dadurch gekennzeichnet, daß man

a) OH-terminierte Triole und/oder lineare Diole mit Diisocyanaten zu NCO-terminierten Polyurethan-Prepolymeren mit einer mittleren NCO-Funktionalität von mindestens 2 umsetzt und einen Teil der NCO-Gruppen mit linearen oder verzweigten aliphatischen Alkoholen mit 1 bis 18 C-Atomen oder Monoalkylpolyetheralkoholen zu einem Polyurethan mit einer mittleren NCO-Funktionalität von mindestens 1 und weniger als 2 umsetzt, oder

a') die OH-terminierten Triole oder linearen Diole mit einem Gemisch von Mono- und Diisocyanaten zu NCO-terminierten Polyurethan-Prepolymeren mit einer mittleren NCO-Funktionalität von mindestens 1 und weniger als 2 umsetzt und

b) im wesentlichen sämtliche freien NCO-Gruppen der erhaltenen Polyurethane mit Alkoxysilanen der allgemeinen Formel

$$X - (CH_2)_{n'} - \overset{\displaystyle R}{\underset{\displaystyle (OR^4)_q}{Si}}(OR^1)_p \quad \text{in der}$$

$$X = -SH,\ -NHR^2,\ R^2CH\text{-}CH\text{-}CH\text{-}CH_2\text{-}O\text{-},$$

$$O$$

$$-(NH\text{-}CH_2\text{-}CH_2)_n\text{-}NHR^2 \quad \text{und}$$

| | |
|---|---|
| n' = | 1 oder 2 und |
| R = | $-CH_3$, $-CH_2-CH_3$, $-OR^1$ und |
| $R^1$ = | $(CH_2CH_2-O)_m-R^3$ und |
| $R^2$ = | H oder ein gegebenenfalls substituierter aliphatischer und/oder cycloaliphatischer oder aromatischer Kohlenwasserstoffrest mit 1 - 10 C-Atomen und |
| $R^3$ = | ein gegebenenfalls substituierter Alkylrest mit 1 - 10 C-Atomen und |
| $R^4$ = | ein Alkylrest mit 1 - 4 C-Atomen und |
| n = | 1 - 8, m = 1-30, p = 1 sowie q + p = 2 bedeuten können, umsetzt. |

2. Verfahren nach Anspruch 1, dadurch gekennzeichnet, daß man Triole und/oder lineare Diole mit einem Zahlenmittel des Molekulargewichts von 300 bis 6500 verwendet.

3. Verfahren nach Anspruch 2 oder 3, dadurch gekennzeichnet, daß man Triole und/oder lineare Diole mit einem Zahlenmittel des Molekulargewichts von 500 bis 3000 verwendet.

4. Verfahren nach einem der Ansprüche 1 bis 3, dadurch gekennzeichnet, daß man als Triole und/oder lineare Diole Alkoxylierungs-, insbesondere Ethoxylierungs- oder Propoxylierungsprodukte di- oder trifunktioneller Alkohole, ausgewählt aus der von Ethylenglykol, Diethylenglykol, Triethylenglykol, 1,2-Propandiol, Dipropylenglykol, den Butandiolen, Hexandiolen, Octandiolen, Hydroxystearylalkohol, Trimethylenglykol, Glycerin und Trimethylolpropan gebildeten Gruppe verwendet.

5. Verfahren nach einem der Ansprüche 1 bis 4, dadurch gekennzeichnet, daß man NCO-terminierte Polyurethan-Prepolymere mit einer mittleren NCO-Funktionalität zwischen 1,2 und 1,8 verwendet.

6. Verfahren nach einem der Ansprüche 1 bis 5, dadurch gekennzeichnet, daß man Monoalkylpolyetheralkohole mit einem Zahlenmittel des Molekulargewichts von 1000 bis 2000 verwendet.

7. Mercaptopropyltrimethoxysilanterminierte, feuchtigkeitshärtende Polyurethane, erhältlich durch

   a) Umsetzung von OH-terminierten Triolen und/oder linearen Diolen mit Diisocyanaten zu NCO-terminierten Polyurethan-Prepolymeren mit einer mittleren NCO-Funktionalität von mindestens 2 und Umsetzung eines Teils der NCO-Gruppen mit linearen oder verzweigten aliphatischen Alkoholen mit 1 bis 18 C-Atomen oder Monoalkylpolyetheralkoholen zu einem Polyurethan mit einer mittleren NCO-Funktionalität von mindestens 1 und weniger als 2, oder
   a') Umsetzung der OH-terminierten Triole oder linearen Diole mit einem Gemisch von Mono- und Diisocyanaten zu NCO-terminierten Polyurethan-Prepolymere mit einer mittleren NCO-Funktionalität von mindestens 1 und weniger als 2 und
   b) Umsetzung im wesentlichen sämtlicher freien NCO-Gruppen der erhaltenen Polyurethan-Prepolymere mit Mercaptopropyltrimethoxysilan.

8. Polyurethane nach Anspruch 7, dadurch gekennzeichnet, daß die Triole und/oder linearen Diole ein Zahlenmittel des Molekulargewichts von 300 bis 6500 aufweisen.

9. Polyurethane nach Anspruch 7 oder 8, dadurch gekennzeichnet, daß die Triole und/oder linearen Diole

ein Zahlenmittel des Molekulargewichts von 500 bis 3000 aufweisen.

**10.** Polyurethane nach einem der Ansprüche 7 bis 9, dadurch gekennzeichnet, daß die Triole und/oder linearen Diole Alkoxylierungs-, insbesondere Ethoxylierungs- oder Propoxylierungsprodukte di- oder trifunktioneller Alkohole, ausgewählt aus der von Ethylenglykol, Diethylenglykol, Triethylenglykol, 1,2-Propandiol, Dipropylenglykol, den Butandiolen, Hexandiolen, Octandiolen, Hydroxystearylalkohol, Trimethylenglykol, Glycerin und Trimethylolpropan gebildeten Gruppe, sind.

**11.** Polyurethan nach einem der Ansprüche 7 bis 10, dadurch gekennzeichnet, daß die mittlere NCO-Funktionalität der NCO-terminierten Polyurethan-Prepolymere zwischen 1,2 und 1,8 liegt.

**12.** Polyurethan nach einem der Ansprüche 7 bis 11, dadurch gekennzeichnet, daß die Monoalkylpolyetheralkohole ein Zahlenmittel des Molekulargewichts von 1000 bis 2000 aufweisen.

**13.** Verwendung der feuchtigkeitshärtenden alkoxysilanterminierten Polyurethane nach einem der Ansprüche 1 bis 12 gegebenenfalls zusammen mit üblichen Zusatzstoffen wie Pigmenten, Füllstoffe, UV-Stabilisatoren, Härtungskatalysatoren und Härtungsbeschleuniger als Dichtungsmassen und/oder Klebemassen.

## Claims

**1.** A process for the production of alkoxysilane-terminated, moisture-curing polyurethanes, characterized in that:

a) OH-terminated triols and/or linear diols are reacted with diisocyanates to form NCO-terminated polyurethane prepolymers having an average NCO functionality of at least 2 and the NCO-groups are partly reacted with linear or branched aliphatic alcohols containing from 1 to 18 carbon atoms or monoalkylpolyether alcohols to form a polyurethane having an average NCO functionality of at least 1 and less than 2, or
a') the OH-terminated triols or linear diols are reacted with a mixture of mono- and diisocyanates to form NCO-terminated polyurethane prepolymers having an average NCO functionality of at least 1 and less than 2 and
b) substantially all the free NCO-groups of the polyurethanes obtained are reacted with alkoxysilanes corresponding to the following general formula

$$X - (CH_2)_{n'} - \underset{\displaystyle (OR^4)_q}{\overset{\displaystyle R}{\overset{|}{\underset{|}{Si}}}}(OR^1)_p$$

in which

$$X = -SH,\ -NHR^2,\ R^2CH\text{-}\underbrace{CH\text{-}CH}_{\diagdown O \diagup}\text{-}CH_2\text{-}O\text{-},$$

$$-(NH\text{-}CH_2\text{-}CH_2)_n\text{-}NHR^2,$$

n' = 1 or 2,
R = $-CH_3$, $-CH_2-CH_3$, $-OR^1$,
$R^1$ = $-(CH_2-CH_2-O)_m-R^3$,
$R^2$ = H or an optionally substituted aliphatic and/or cycloaliphatic or aromatic hydrocarbon radical containing from 1 to 10 carbon atoms,
$R^3$ = an optionally substituted alkyl radical containing from 1 to 10 carbon atoms,
$R^4$ = an alkyl radical containing from 1 to 4 carbon atoms and
n = 1 - 8, m = 1 - 30, p = 1 and q + p = 2.

**2.** A process as claimed in claim 1, characterized in that the triols and/or linear diols have a number average molecular weight of from 300 to 6500.

**3.** A process as claimed in claim 2 or 3, characterized in that the triols and/or linear diols used have a number average molecular weight of from 500 to 3000.

**4.** A process as claimed in any of claims 1 to 3, characterized in that the triols and/or linear diols are alkoxylation products, more especially ethoxylation or propoxylation products, of difunctional or trifunctional alcohols selected from the group comprising ethylene glycol, diethylene glycol, triethylene glycol, 1,2-propanediol, dipropylene glycol, the butanediols, hexanediols, octanediols, hydroxystearyl alcohol, trimethylene glycol, glycerol and trimethylolpropane.

**5.** A process as claimed in any of claims 1 to 4, characterized in that the average NCO functionality of the NCO-terminated polyurethane prepolymers is from 1.2 to 1.8.

**6.** A process as claimed in any of claims 1 to 5, characterized in that the monoalkylpolyether alcohols have a number average molecular weight of from 1000 to 2000.

**7.** Mercaptopropyltrimethoxysilane-terminated, moisturecuring polyurethanes obtainable

a) by reaction of OH-terminated triols and/or linear diols with diisocyanates to form NCO-terminated polyurethane prepolymers having an average NCO functionality of at least 2 and partial reaction of the NCO groups with linear or branched aliphatic alcohols containing from 1 to 18 carbon atoms or monoalkylpolyether alcohols to form a polyurethane having an average NCO functionality of at least 1 and less than 2, or
a') by reaction of the OH-terminated triols or linear diols with a mixture of mono- and diisocyanates to form NCO-terminated polyurethane prepolymers having an average NCO functionality of at least 1 and less than 2, and
b) by reaction of substantially all the free NCO groups of the polyurethane prepolymers obtained with mercaptopropyltrimethoxysilane.

**8.** Polyurethanes as claimed in claim 7, characterized in that the triols and/or linear diols have a number average molecular weight of from 300 to 6500.

**9.** Polyurethanes as claimed in claim 7 or 8, characterized in that the triols and/or linear diols used have a number average molecular weight of from 500 to 3000.

**10.** Polyurethanes as claimed in any of claims 7 to 9, characterized in that the triols and/or linear diols are alkoxylation products, more especially ethoxylation or propoxylation products, of difunctional or trifunctional alcohols selected from the group comprising ethylene glycol, diethylene glycol, triethylene glycol, 1,2-propanediol, dipropylene glycol, the butanediols, hexanediols, octanediols, hydroxystearyl alcohol, trimethylene glycol, glycerol and trimethylolpropane.

**11.** Polyurethanes as claimed in any of claims 7 to 10, characterized in that the average NCO functionality of the NCO-terminated polyurethane prepolymers is from 1.2 to 1.8.

**12.** Polyurethanes as claimed in any of claims 7 to 11, characterized in that the monoalkylpolyether alcohols have a number average molecular weight of from 1000 to 2000.

**13.** The use of the moisture-curing, alkoxysilane-terminated polyurethanes claimed in any of claims 1 to 12, optionally together with standard additives, such as pigments, fillers, UV stabilizers, curing catalysts and curing accelerators, as sealing compounds and/or adhesives.

**Revendications**

**1.** Procédé de fabrication de polyuréthanes durcissant à l'humidité et à terminaison alcoxysilane, caractérisé en ce que l'on transforme par réaction
a) des diols linéaires et/ou des triols à terminaison OH avec des diisocyanates, en prépolymères de

polyuréthane à terminaison NCO avec une fonctionnalité NCO moyenne d'au moins 2, et en ce que l'on transforme par réaction une partie des groupements NCO avec des alcools aliphatiques linéaires ou ramifiés comportant 1 à 18 atomes de C ou avec des monoalkylpolyétheralcools, en un polyuréthane avec une fonctionnalité NCO moyenne d'au moins 1 mais inférieure à 2, ou en ce que l'on transforme par réaction

a') des diols linéaires ou des triols à terminaison OH avec un mélange de mono- et de diisocyanates, en prépolymères de polyuréthane à terminaison NCO avec une fonctionnalité NCO moyenne d'au moins 1 mais inférieure à 2 et en ce que l'on fait réagir

b) essentiellement tous les groupements NCO libres des polyuréthanes obtenus avec des alcoxysilanes de la formule générale

$$X - (CH_2)_{n'} - \overset{\displaystyle R}{\underset{\displaystyle (OR^4)_q}{Si(OR^1)_p}}$$

dans laquelle la signification des différents termes peut être la suivante:

$$X \;=\; -SH,\ -NHR^2,\ R^2CH\underset{O}{-CH-CH-}CH_2-O-,$$

$$-(NH-CH_2-CH_2)_n-NHR^2 \text{ et}$$

| | |
|---|---|
| n' = | 1 ou 2 et |
| R = | $-CH_3$, $-CH_2-CH_3$, $-OR^1$ et |
| $R^1$ = | $-(CH_2-CH_2-O)_m-R^3$ et |
| $R^2$ = | H ou un radical de carbone aliphatique et/ou cycloaliphatique ou aromatique éventuellement substitué, comportant 1 à 10 atomes de C et |
| $R^3$ = | un radical alkyle éventuellement substitué comportant 1 à 10 atomes de C et |
| $R^4$ = | un radical alkyle comportant 1 à 4 atomes de C et |
| n = | 1 à 8, m = 1 à 30, p = 1 et q + p = 2. |

**2.** Procédé selon la revendication 1, caractérisé en ce que l'on utilise des diols linéaires et/ou des triols avec une moyenne numérique du poids moléculaire de 300 à 6500.

**3.** Procédé selon la revendication 2 ou 3 (1 ou 2), caractérisé en ce que l'on utilise des diols linéaires et/ou des triols avec une moyenne numérique du poids moléculaire de 500 à 3000.

**4.** Procédé selon l'une des revendications 1 à 3, caractérisé en que l'on utilise comme diols linéaires et/ou triols des produits d'alcoxylation, en particulier d'éthoxylation et/ou de propoxylation, d'alcools di- ou trifonctionnels, sélectionnés parmi le groupe formé par les composés suivants: éthylèneglycol, diéthylèneglycol, triéthylèneglycol, 1,2-propanediol, dipropylèneglycol, butanediols, hexanediols, octanediols, alcool hydroxystéarylique, triméthylèneglycol, glycérine et triméthylolpropane.

**5.** Procédé selon l'une des revendications 1 à 4, caractérisé en ce que l'on utilise des prépolymères de polyuréthane à terminaison NCO avec une fonctionnalité NCO moyenne comprise entre 1,2 et 1,8.

**6.** Procédé selon l'une des revendications 1 à 5, caractérisé en ce que l'on utilise des monoalkylpolyétheralcools avec une moyenne numérique du poids moléculaire de 1000 à 2000.

**7.** Polyuréthanes durcissant à l'humidité, à terminaison mercaptopropyltriméthoxysilane, obtenables par

a) transformation par réaction de diols linéaires et/ou de triols à terminaison OH avec des

diisocyanates en prépolymères de polyuréthane à terminaison NCO, présentant une fonctionnalité NCO moyenne d'au moins 2, et transformation par réaction d'une partie des groupements NCO avec des alcools aliphatiques linéaires ou ramifiés comportant 1 à 18 atomes de C ou avec des monoalkylpolyétheralcools en un polyuréthane présentant une fonctionnalité NCO moyenne d'au moins 1, mais inférieure à 2, ou

a') transformation par réaction de diols linéaires ou de triols à terminaison OH avec un mélange de mono- et de diisocyanates en prépolymères de polyuréthane à terminaison NCO, présentant une fonctionnalité NCO moyenne d'au moins 1, mais inférieure à 2, et

b) mise en réaction essentiellement de tous les groupes NCO libres des prépolymères de polyuréthane obtenus avec du mercaptopropyltriméthoxysilane.

**8.** Polyuréthanes selon la revendication 7, caractérisés en ce que les diols linéaires et/ou les triols présentent une moyenne numérique du poids moléculaire de 300 à 6500.

**9.** Polyuréthanes selon la revendication 7 ou 8, caractérisés en ce que les diols linéaires et/ou les triols présentent une moyenne numérique du poids moléculaire de 500 à 3000.

**10.** Polyuréthanes selon l'une des revendications 7 à 9, caractérisés en ce que les triols et/ou les diols linéaires sont des produits d'alcoxylation, en particulier d'éthoxylation et/ou de propoxylation, d'alcools di- ou trifonctionnels, sélectionnés parmi le groupe formé par les composés suivants: éthylèneglycol, diéthylèneglycol, triéthylèneglycol, 1,2-propanediol, dipropylèneglycol, butanediols, hexanediols, octanediols, alcool hydroxystéarylique, triméthylèneglycol, glycérine et triméthylolpropane.

**11.** Polyuréthane selon l'une des revendications 7 à 10, caractérisé en ce que la fonctionnalité NCO moyenne des prépolymères de polyuréthane à terminaison NCO est comprise entre 1,2 et 1,8.

**12.** Polyuréthane selon l'une des revendications 7 à 11, caractérisé en ce que les monoalkylpolyétheralcools présentent une moyenne numérique du poids moléculaire de 1000 à 2000.

**13.** Utilisation des polyuréthanes durcissant à l'humidité à terminaison alcoxysilane selon l'une des revendications 1 à 12, le cas échéant conjointement avec des additifs usuels, tels que pigments, matières de remplissage, stabilisateurs UV, catalyseurs de durcissement et accélérateurs de durcissement, comme matières d'étanchéité et/ou comme matières de collage.